# EUROPÄISCHE PATENTSCHRIFT

(11) **EP 1 724 591 B1**
(45) Veröffentlichungstag und Bekanntmachung des Hinweises auf die Patenterteilung: **21.07.2010**
(21) Anmeldenummer: 06009288.9
(22) Anmeldetag: 05.05.2006
(51) Int. Cl.: G01P 5/16, G01P 5/165, G01P 13/02, B64D 43/00

(54) **Fluggerät mit einer Einrichtung zur Aussendruckbestimmung**
Aerial vehicle with a device for determining external pressure
Véhicule volant avec un dispositif pour déterminer la pression externe

(30) Priorität: 19.05.2005 DE 102005022942; 19.05.2005 DE 102005022943
(43) Veröffentlichungstag der Anmeldung: 22.11.2006
(73) Patentinhaber: EADS Deutschland GmbH, 85521 Ottobrunn (DE)
(72) Erfinder: Herrmann, Otfrid, 83052 Bruckmühl (DE)

(56) Entgegenhaltungen:
- DE-A1- 4 121 584
- GB-A- 790 572
- US-A- 4 393 692
- US-B2- 6 568 260
- US-B2- 6 847 865

## Beschreibung

Die Erfindung betrifft ein Fluggerät mit einer Einrichtung zur Außendruckbestimmung .

Im Stand der Technik werden externe Sonden zur Bestimmung des Außendrucks (insbesondere statischer Druck, Gesamtdruck) verwendet. Diese Sonden haben den Nachteil, dass diese bei Vereisung und Vogelschlag große Messungenauigkeiten verursachen. Zum Schutz vor Vereisungen, zum Beispiel, muss die Sonde geheizt werden. Außerdem wird die Entdeckbarkeit eines militärischen Flugzeuges gegenüber Radarstrahlen ungünstig beeinflusst.

In der GB 790,572 ist ein Fluggerät mit einer Drucksonde zur Bestimmung des statischen Drucks im hinteren Bereich des Fluggeräts bekannt. Konkret befindet sich die Drucksonde seitlich an einem Stab, der am oberen Rand des Seitenleitwerks angeordnet ist.

In der US 4,393,692 ist eine Drucksonde im Einlauf einer Turbomaschine angeordnet.

Die US 6,568,260 B2 offenbart Drucksensoren, die an den Seitenflächen einer Fluggeräts angeordnet sind.

Die US 6,847,865 B2 offenbart einen barometrischen Höhenmesser, der versenkt an der Unterseite eines Fluggeräts angeordnet ist.

Es ist Aufgabe der Erfindung, eine Einrichtung zur Bestimmung des Außendrucks in einem Fluggerät bereitzustellen, die unempfindlich gegen externe Störeinwirkungen ist.

Erfindungsgemäß ist eine Einrichtung zur Außendruckbestimmung an einem Fluggerät vorgesehen, mit einer Drucksonde und einem mit diesem funktional verbundenen Luftwerterechner zur Ermittlung von Druckwerten aus den mittels der Drucksonde aufgenommenen Messwerten, wobei die Drucksonde im Fluggerät versenkt angeordnet ist.

Durch die erfindungsgemäße Maßnahme, die Drucksonde versenkt, also in einer Vertiefung an der Außenhaut des Fluggeräts anzuordnen, wird eine optimale Tarnung gegenüber Radarstrahlung (Stealth) erzielt. Gleichzeitig wird ein verbesserter Schutz vor Vogelschlag erreicht. Ein Heizen zur Vermeidung von Vereisung der Drucksonde kann darüber hinaus weitgehend vermieden werden.

Die Erfindung kann in allen Arten von Fluggeräten angewandt werden, insbesondere in Kampfflugzeugen oder unbemannten Flugobjekten (Drohnen).

Gemäß der Erfindung umfasst das Fluggerät zur Bestimmung des statischen Drucks eine Drucksonde mit einer Messbohrung und zugeordnetem Druckwandler, wobei die Messbohrung an einer im Flug von der Strömung abgewandten Einbaufläche des Fluggeräts angeordnet ist.

Der Bereich der Messbohrung an der Außenhaut des Fluggeräts ist dabei so gewählt, dass die Strömung - zumindest in einer bestimmten Flugphase des Fluggeräts - abgelöst ist. Die vorbestimmte Flugphase kann insbesondere der für den Reiseflug des Fluggeräts definierte Flugbereich oder ein Teilbereich desselben sein. Bevorzugt wird die Messbohrung im Heck des Fluggeräts angeordnet. Mit dem ermittelten statischen Druck kann insbesondere die Druckhöhe (Flughöhe) berechnet werden.

Die erfindungsgemäße Einrichtung für die Bestimmung des statischen Drucks kann auch mit einer Einrichtung zur Bestimmung des Gesamtdrucks kombiniert werden, um daraus sowohl die Druckhöhe (Flughöhe) als auch die Fluggeschwindigkeit des Fluggeräts gegenüber Luft zu berechnen. Dabei kann anstatt eines Luftwerterechners für jede der beiden Messeinrichtungen ein gemeinsamer Luftwerterechner zur Ermittlung von Druckwerten aus den mittels der einzelnen Drucksonden aufgenommenen Messwerte vorhanden sein. In diesem Luftwerterechner erfolgt auch die Berechnung der Druckhöhe und der Geschwindigkeit des Fluggeräts relativ zur Luft unter Verwendung der Druckwerte für statischen und Gesamtdruck.

Dabei erfolgt die Bestimmung des Gesamtdrucks mit einer Pitot-Sonde, die in einem Lufteinlauf für ein Triebwerk oder einen Hilfseinlauf angeordnet ist. In dem Lufteinlauf oder Hilfseinlauf können radarabsorbierenden Einbauten angeordnet sein, wobei die Pitot-Sonde in Strömungsrichtung gesehen hinter den absorbierenden Einbauten angeordnet ist. Radarabsorbierende Einbauten können z.B. sein:
radarabsorbierende Ringe, Gitter, Netze oder Belegung der Einlaufwände mit radarabsorbierenden Matten oder sonstigen flächenhaften Strukturen.

Weiterhin ist eine vorteilhafte Einrichtung zur Bestimmung des Außendrucks an einem Fluggerät vorgesehen, wobei das Fluggerät ein unbemanntes Fluggerät ist und mit dem Luftwerterechner funktional zum einen ein Transponder und zum anderen ein Autopilot mit einer Höhenhaltungs-Betriebsart verbunden ist und dass der Transponder eine Funktion aufweist, mit der die im Luftwerterechner ermittelten Höhenwerte an eine Bodenstation übermittelt werden, um die Flughöhe des Fluggeräts zu kontrollieren.

Weiterhin ist eine vorteilhafte Einrichtung zur Bestimmung des Außendrucks an einem Fluggerät vorgesehen, wobei mit dem Luftwerterechner funktional eine Mensch-Maschine-Schnittstelle verbunden ist, auf der ermittelte Luftwerte angezeigt werden.

Konkrete Ausführungsbeispiele der Erfindung werden im Folgenden anhand von Figuren beschrieben. Es zeigt:
- Fig. 1: die schematische Darstellung eines Fluggeräts mit einer erfindungs- gemäßen Einrichtung zur Messung des statischen Drucks und zugeordneten Komponenten sowie einer Bodenstation zur Kontrolle der Höhenhaltung des Fluggeräts,
- Fig. 2: die schematische Darstellung eines Fluggeräts mit einem Triebwerkseinlauf mit einer erfindungsgemäßen Einrichtung zur Messung des Gesamtdrucks und zugeordneten Komponenten,
- Fig. 3: die schematische Darstellung eines Fluggeräts mit einem Hilfseinlauf mit der erfindungsgemäßen Einrichtung zur Messung des Gesamtdrucks und zugeordneten Komponenten.

Die erfindungsgemäße Einrichtung zur Bestimmung des statischen Drucks ist an einer von der Strömung R abgewandten Einbaufläche 5 des Fluggeräts angeordnet. Diese Einbaufläche ist vorzugsweise Teil der Rückseite 2 (Heck) des Fluggeräts, d. h. der in Strömungsrichtung R gesehen hinterste Bereich des Fluggeräts. Bei der Anordnung von zwei Triebwerksdüsen an dieser Rückseite kann die Einbaufläche beispielsweise zwischen diesen beiden Düsen gelegen sein. Generell sollte die Einbaufläche vorteilhaft möglichst zentral im Rumpfquerschnitt angeordnet sein. Ein weiterer möglicher Einbauort ist die Hinterseite des Seitenleitwerks, wenn dieses eine nach hinten gerichtete Fläche aufweist.

Erfindungsgemäß ist die Einbaufläche in jedem Fall ein Bereich, bei dem die Strömung im vorgesehenen Reiseflugbereich des Fluggeräts abgelöst ist. Dabei handelt es sich insbesondere um Flächen an einem Körper, der nach hinten stumpf abgeschnitten ist. Die für einen Einbauort geeigneten Flächen weisen insbesondere einen Winkel im Bereich von 70-90° zur Strömungsrichtung auf.

Vorteilhaft beträgt der Bereich der abgelösten Strömung, in dem erfindungsgemäß die Messeinrichtung eingebaut ist, zumindest 10 % der Querschnittsfläche des Rumpfs. Bei nicht vollkommen stumpf ausgeführten Rückseite des Fluggeräts wird die Querschnittsfläche des Heckbereichs definiert als die durchschnittliche Querschnittsfläche im Bereich der Triebwerksdüse(n).

An der Einbaufläche 5 ist zumindest eine Messbohrung 1 angeordnet, der wiederum ein Druckwandler zur Wandlung des gemessenen Luftdrucks in eine elektrische Größe zugeordnet ist. Der Druckwandler kann unmittelbar an der Messbohrung angeordnet sein. Es ist aber auch möglich, den Druckwandler an einem sonstigen Ort innerhalb des Fluggeräts anzuordnen, wobei in diesem Fall Messbohrung und Druckwandler z.B. über eine Schlauchverbindung miteinander kommunizieren. Mit diesem Drucksensor steht funktional ein Luftwerterechner 10 in Verbindung, an dem über eine entsprechende Signalleitung 12 die gemessenen statischen Drücke übermittelt werden.

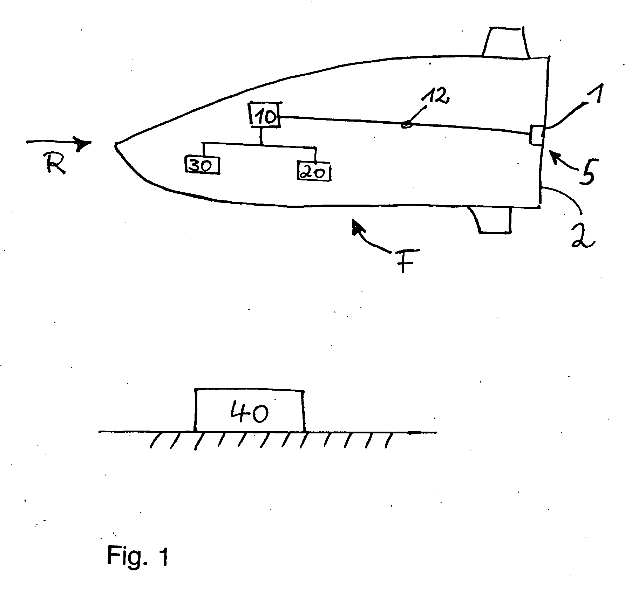

Die in Fig. 1 dargestellte erfindungsgemäße Einrichtung ist unter anderem zur Ermittlung der Flughöhe, z.B. im Reiseflugbetrieb vorgesehen. In dem Luftwerterechner 10 werden die gemessenen Drücke hinsichtlich von Einflussgrößen korrigiert, z. B. in Abhängigkeit von Triebwerksparametern, des Schiebewinkels und/oder des Anstellwinkels. Der Luftwerterechner 10 ermittelt daraufhin mit einer entsprechenden Funktion die Flughöhe des Fluggeräts. Zusätzlich wird mittels des an anderer Stelle gemessenen Gesamtdrucks die Geschwindigkeit des Fluggeräts gegenüber der Luft berechnet.

Dem Luftwerterechner 10 kann insbesondere ein Autopilot 20 zugeordnet sein der eine Funktion zur Höhenhaltung des Fluggeräts umfasst und entsprechende Steuerkommandos an eine Steuereinrichtung übermittelt.

In einer speziellen Anwendung wird die erfindungsgemäße Einrichtung für ein unbemanntes Flugzeug verwendet. In diesem Fall kann dem Luftwerterechner zusätzlich ein Transponder 30 oder eine Sendeeinrichtung zugeordnet sein, die die ermittelten Höhenwerte an eine Bodenstation 40 sendet. In der Bodenstation 40 ist eine Funktion implementiert, mit der die Höhe des Fluggeräts kontrolliert werden kann.

Bei der Verwendung der erfindungsgemäßen Einrichtung für ein bemanntes Fluggerät kann der Luftwerterechner mit einer Mensch-Maschine-Schnittstelle verbunden sein, mit der ermittelte Höhenwerte angezeigt werden.

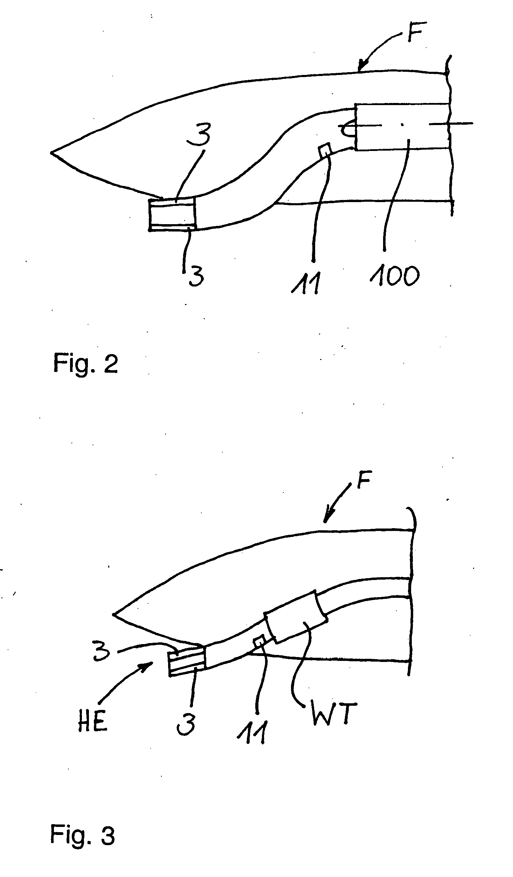

Fig. 2 zeigt eine Einrichtung zur Messung des Gesamtdrucks. Sie umfasst eine Pitot-Sonde 11, die im Einlauf E eines luftatmenden Triebwerks 100, mit dem das Fluggerät F angetrieben wird, angeordnet. Der Einlauf E weist im vorderen Bereich radarabsorbierende Einbauten 3 auf. Diese Einbauten können Matten sein, die auf den Innenflächen des Einlaufs E bereichsweise angeordnet sind. Auch können die Einbauten Strukturbauteile wie geeignete Gittereinrichtungen (z.B. quer zur Einströmung angeordnet) umfassen. Die Einbauten sind insbesondere aus radarabsorbierenden Materialien aufgebaut.

Vorteilhaft ist die Pitot-Sonde 11 in Strömungsrichtung gesehen hinter den radarabsorbierenden Einbauten und vor dem Triebwerk 100 angeordnet.

Die erfindungsgemäße Einrichtung ist zur Ermittlung der Geschwindigkeit des Fluggeräts vorgesehen. Zu diesem Zweck ist die Druckmesseinrichtung funktional mit einem Druckwandler verbunden, der wiederum mit einem Luftwerterechner in Verbindung steht. Der Luftwerterechner korrigiert die gemessenen Gesamtdrücke hinsichtlich der auftretenden Einflussgrößen wie z. B. die Strömungszustände Schiebewinkel, Anstellwinkel oder den Luftdurchsatz im Triebwerkseinlauf.

Der Luftwerterechner ermittelt daraufhin mit einer entsprechenden Funktion zusammen mit einem ebenfalls ermittelten statischen Druck die Fluggeschwindigkeit des Fluggeräts gegenüber der Luft.

Alternativ kann die Pitot-Sonde 11 auch in einem Hilfseinlauf HE, wie es in der Fig. 3 dargestellt ist, eingesetzt werden. Dabei ist die Pitot-Sonde hinter den radarabsorbierenden Einbauten 3 und vorzugsweise vor sonstigen Einbauten, wie insbesondere einem im Hilfseinlauf integrierten Wärmetauscher WT eingebaut. Bei dem Hilfseinlauf kann es sich z.B. um einen Einlauf speziell für die Klimaanlage oder die Belüftung des Fluggeräts handeln.

In allen gezeigten Ausführungen gemäß Fig. 1 bis 3 befindet sich die Drucksonde somit innerhalb der Außenkontur des Fluggeräts. Die Entdeckungswahrscheinlichkeit gegenüber Radaraufklärung wird somit stark gesenkt. Die Empfindlichkeit gegenüber Vogelschlag und Vereisung wird ebenfalls verbessert.

## Patentansprüche

1. Fluggerät (F) mit einer Einrichtung zur Außendruckbestimmung mit einer Drucksonde und einem mit dieser funktional verbundenen Luftwerterechner (10) zur Ermittlung von Druckwerten aus den mittels der Drucksonde aufgenommenen Messwerten, wobei die Drucksonde im Fluggerät versenkt angeordnet ist und als Sonde zur Bestimmung des statischen Drucks ausgebildet ist, welche eine Messbohrung (1) mit zugeordnetem Druckwandler umfasst, **dadurch gekennzeichnet, dass** die Messbohrung (1) an einer im Flugbetrieb von der Strömung abgewandten Fläche des Fluggeräts (F) angeordnet ist, wobei diese Fläche einen Winkel im Bereich von 70 - 90° zur Strömungsrichtung aufweist, und wobei im Bereich (5) der Messbohrung (1) die Strömung abgelöst ist.

2. Fluggerät (F) nach Anspruch 1, **gekennzeichnet durch**
- eine Pitot-Sonde (11) zur Bestimmung des Gesamtdrucks, wobei die Pitot-Sonde (11) in einem Lufteinlauf (E) eines Triebwerks (100) des Fluggeräts (F) oder einem Hilfseinlauf (HE) angeordnet ist.
- wobei die Pitot-Sonde (11) funktional mit dem Luftwerterechner zur Ermittlung der Geschwindigkeit des Fluggeräts (F) aus den jeweils ermittelten Werten für den statischen Druck und den Gesamtdruck verbunden ist.

3. Fluggerät (F) nach Anspruch 2, **dadurch gekennzeichnet, dass** die Pitot-Sonde (11), in Strömungsrichtung gesehen, hinter radarabsorbierenden Einbauten (3), welche im Lufteinlauf (E) oder im Hilfseinlauf (HE) vorhanden sind, angeordnet ist.

4. Fluggerät (F) nach einem der vorangehenden Ansprüche, **dadurch gekennzeichnet, dass** das Fluggerät ein unbemanntes Fluggerät ist und dass mit dem Luftwerterechner (10) funktional zum einen ein Transponder und zum anderen ein Autopilot (20) mit einer Höhenhaltungsbetriebsart verbunden ist und dass der Transponder (30) eine Funktion aufweist, mit der die im Luftwerterechner (10) ermittelten Höhenwerte an eine Bodenstation (40) übermittelt werden, um die Flughöhe des Fluggeräts zu kontrollieren.

5. Fluggerät (F) nach einem der vorangehenden Ansprüche, **dadurch gekennzeichnet, dass** mit dem Luftwerterechner (10) funktional eine Mensch-Maschine-Schnittstelle verbunden ist, mit dem die ermittelten Höhenwerte angezeigt werden.

6. Fluggerät (F) nach einem der vorangehenden Ansprüche, **dadurch gekennzeichnet, dass** die Einrichtung zur Bestimmung des statischen Drucks versenkt am Heck des Fluggeräts (F) angeordnet ist.

## Claims

1. Airborne vehicle (F) having a device for external-pressure determination by means of a pressure probe, and having an air data computer (10), which is functionally connected to said pressure probe, for determining pressure values from measured values recorded by means of the pressure probe, wherein the pressure probe is arranged recessed in the airborne vehicle and is designed as a probe for determining the static pressure, which probe comprises a measurement hole (1) with an associated pressure transducer, **characterized in that** the measurement hole (1) is arranged on a surface of the airborne vehicle (F) facing away from the flow during flight, wherein this surface is at an angle in the range between 70 and 90° to the flow direction, and wherein the flow has separated in the area (5) of the measurement hole (1).

2. Airborne vehicle (F) according to Claim 1, **characterized by**
- a pitot probe (11) for determining the total pressure, wherein the pitot probe (11) is arranged in an air intake (E) of an engine (100) of the airborne vehicle (F), or in an auxiliary intake (HE),
- wherein the pitot probe (11) is functionally connected to the air data computer in order to determine the speed of the airborne vehicle (F) on the respectively determined values for the static pressure and the total pressure.

3. Airborne vehicle (F) according to Claim 2, **characterized in that** the pitot probe (11) is arranged behind radar-absorbent fittings (3), when seen in the flow direction, which fittings (3) are provided in the air intake (E) or in the auxiliary intake (HE).

4. Airborne vehicle (F) according to one of the preceding claims, **characterized in that** the airborne vehicle is an unmanned airborne vehicle, and **in that** on the one hand a transponder and on the other hand an autopilot (20) having an altitude-maintaining operating mode are functionally connected to the air data computer (10), and **in that** the transponder (30) has a function by means of which the altitude values determined in the air data computer (10) are transmitted to a ground station (40), in order to monitor the altitude of the airborne vehicle.

5. Airborne vehicle (F) according to one of the preceding claims, **characterized in that** a man-machine interface, by means of which the determined altitude values are indicated, is functionally connected to the air data computer (10).

6. Airborne vehicle (F) according to one of the preceding claims, **characterized in that** the device for determining the static pressure is arranged recessed at the tail of the airborne vehicle (F).

## Revendications

1. Engin volant (F) comprenant un dispositif pour déterminer la pression extérieure avec une sonde de pression et une centrale de bord (10) reliée de manière fonctionnelle à celle-ci pour déterminer des valeurs de la pression à partir des valeurs mesurées relevées au moyen de la sonde de pression, la sonde de pression étant montée noyée dans l'engin volant et étant réalisée sous la forme d'une sonde pour déterminer la pression statique, laquelle comprend un orifice de mesure (1) auquel est associé un convertisseur de pression, **caractérisé en ce que** l'orifice de mesure (1) est disposé sur une surface de l'engin volant (F) qui est à l'opposé de l'écoulement en mode de vol, cette surface présentant un angle dans la plage de 70° à 90° par rapport au sens de l'écoulement et l'écoulement étant détaché dans la zone (5) de l'orifice de mesure (1).

2. Engin volant (F) selon la revendication 1, **caractérisé par**
- une sonde de Pitot (11) pour déterminer la pression totale, la sonde de Pitot (11) étant disposée dans une entrée d'air (E) d'un groupe propulseur (100) de l'engin volant (F) ou dans une entrée auxiliaire (HE),
- la sonde de Pitot (11) étant reliée de manière fonctionnelle à la centrale de bord pour déterminer la vitesse de l'engin volant (F) à partir des valeurs respectivement déterminées pour la pression statique et la pression totale.

3. Engin volant (F) selon la revendication 2, **caractérisé en ce que** la sonde de Pitot (11), vue dans le sens de l'écoulement, est disposée derrière des objets encastrés (3) absorbant les radars qui sont présents dans l'entrée d'air (E) ou dans l'entrée auxiliaire (HE).

4. Engin volant (F) selon l'une des revendications précédentes, **caractérisé en ce que** l'engin volant est un engin volant non habité et qu'avec la centrale de bord (10) sont reliés fonctionnellement d'une part un transpondeur et d'autre part un pilote automatique (20) avec un mode de fonctionnement de maintien de l'altitude et que le transpondeur (30) présente une fonction avec laquelle les valeurs de l'altitude déterminées par la centrale de bord (10) sont communiquées à une station de sol (40) afin de contrôler l'altitude de vol de l'engin volant.

5. Engin volant (F) selon l'une des revendications précédentes, **caractérisé en ce qu'**avec la centrale de bord (10) est reliée fonctionnellement une interface homme/machine avec laquelle sont affichées les valeurs d'altitude déterminées.

6. Engin volant (F) selon l'une des revendications précédentes, **caractérisé en ce que** le dispositif de détermination de la pression statique est noyé à l'arrière de l'engin volant (F).
